# FASCICULE DE BREVET EUROPEEN

(11) **EP 0 484 203 B1**
(45) Date de publication et mention de la délivrance du brevet: **08.06.1994**
(21) Numéro de dépôt: 91402821.2
(22) Date de dépôt: 23.10.1991
(51) Int. Cl.: B64D 45/02, F16B 33/00

(54) **Structure anti-étincelage, notamment pour aéronef**
Funkensichere Struktur, insbesondere für Flugzeuge
Anti-spark structure, in particular for aircraft

(30) Priorité: 30.10.1990 FR 9013454
(43) Date de publication de la demande: 06.05.1992
(73) Titulaire: AEROSPATIALE Société Nationale Industrielle, 75781 Paris Cédex 16 (FR)
(72) Inventeur: Gondot, Pascal, F-94190 Villeneuve-Saint-Georges (FR); Avenet, Jean-Pierre, F-75020 Paris (FR); Weber, Renaud, F-92400 Courbevoie (FR)
(74) Mandataire: Bonnetat, Christian

(56) Documents cités:
- EP-A- 0 248 122
- GB-A- 2 212 580
- US-A- 3 755 713

## Description

La présente invention concerne les structures anti-étincelage, notamment pour aéronef.

On connaît déjà du document EP-A-0 248 122 une structure comportant :
- deux éléments de matière composite ayant chacun une face extérieure et une face intérieure et disposés de façon que la face intérieure du premier desdits éléments soit au moins partiellement superposée à la face extérieure du second desdits éléments, les parties superposées desdits éléments comportant des paires de trous en regard ;
- des vis à tête fraisée, dont chacune d'elles traverse une paire desdits trous en regard de façon que sa tête vienne se loger dans une fraisure prévue dans la face extérieure dudit premier élément ;
- des écrous susceptibles de coopérer respectivement avec lesdites vis et de prendre appui sur la face intérieure dudit second élément pour presser la tête fraisée de la vis correspondante dans ladite fraisure; et
   des premiers moyens pour isoler électriquement ledit écrou de ladite face intérieure dudit second élément.

Lorsqu'une telle structure est soumise à l'action de la foudre, le courant de décharge se propage par lesdites vis et engendre l'apparition d'arcs entre lesdits écrous et la face intérieure dudit second élément. De tels arcs peuvent entraîner la destruction de la structure, surtout si celle-ci forme un réservoir de carburant, car alors les arcs peuvent enflammer ce dernier.

Pour remédier à cet inconvénient, les documents US-A-4 891 732 et GB-A-2 212 580 proposent d'isoler électriquement lesdits premier et second éléments et de dissiper le courant de décharge à travers ceux-ci en favorisant le passage dudit courant de décharge, d'une part entre les têtes des vis et le premier élément et, d'autre part, entre les extrémités desdites vis opposées auxdites têtes et ledit second élément. Il en résulte alors une structure complexe pour lesdits écrous et/ou pour leur agencement par rapport audit second élément.

La présente invention a pour objet de remédier à cet inconvénient de complexité et de permettre de rendre la structure résistante aux coups de foudre en n'utilisant que des écrous standard.

A cette fin, selon l'invention, la structure anti-étincelage, notamment pour aéronef, comportant :
- deux éléments de matière composite ayant chacun une face extérieure et une face intérieure et disposés de façon que la face intérieure du premier desdits éléments soit au moins partiellement superposée à la face extérieure du second desdits éléments, les parties superposées desdits éléments comportant des trous en regard ;
- une vis à tête fraisée traversant lesdits trous en regard de façon que sa tête vienne se loger dans une fraisure prévue dans la face extérieure dudit premier élément ;
- un écrou susceptible de coopérer avec ladite vis et de prendre appui sur la face intérieure dudit second élément pour presser ladite tête fraisée dans ladite fraisure; et des premiers moyens pour isoler électriquement ledit écrou de ladite face intérieure dudit second élément,
   est remarquable en ce qu'elle comporte :
- des moyens pour améliorer la conduction électrique entre les parties superposées de la face intérieure dudit premier élément et de la face extérieure dudit second élément ; et
- des seconds moyens pour isoler électriquement dudit second élément au moins la partie de la vis proche dudit écrou.

Ainsi, lorsque la foudre atteint la tête de ladite vis, le courant de décharge passe de la tête de celle-ci audit premier élément grâce au contact avec ladite fraisure, et dudit premier élément au second élément, grâce auxdits moyens améliorant la conduction électrique à l'interface desdits premier et second éléments. L'énergie du courant de décharge peut donc se dissiper dans lesdits premier et second éléments. De plus, grâce aux moyens d'isolation électrique aucun arc n'apparaît entre l'écrou et la face intérieure dudit second élément.

Lesdits moyens d'amélioration de la conduction électrique à l'interface desdits premier et second éléments pourraient être formés par une couche d'une matière électriquement conductrice, formant un adhésif ou une matière d'étanchéité. Toutefois, dans un mode de réalisation préférentiel, de tels moyens sont formés par une grille électriquement conductrice, multipliant les points de contact entre lesdits éléments et elle-même. Une telle grille peut être réalisée en métal déployé, de façon à comporter des aspérités ou des picots pénétrant dans la matière desdits éléments et constituant ainsi autant de points de contact.

Par ailleurs, lesdits seconds moyens d'isolation électrique peuvent être formés par une couche isolante pratiquée sur la paroi de ladite vis et/ou sur la paroi du trou dans ledit second élément. Ils peuvent également être formés par un canon isolant entourant ladite vis. A des fins de simplicité de réalisation, ces moyens d'isolation peuvent s'étendre sur toute l'épaisseur dudit second élément.

Lorsque lesdits seconds moyens d'isolation et lesdits premiers moyens d'isolation sont constitués de couches isolantes portées respectivement sur la paroi du trou et par la face intérieure dudit second élément, ou bien lorsqu'ils sont formés respectivement par un canon et une rondelle, il est avantageux qu'ils soient solidaires l'un de l'autre sans discontinuité.

Afin d'améliorer encore le passage du courant de décharge entre la vis et ledit premier élément, il est avantageux que ladite vis soit du type à fût lisse dont seule l'extrémité opposée à la tête est filetée et que la partie dudit fût traversant le trou dudit premier élément soit en contact avec la paroi dudit trou.

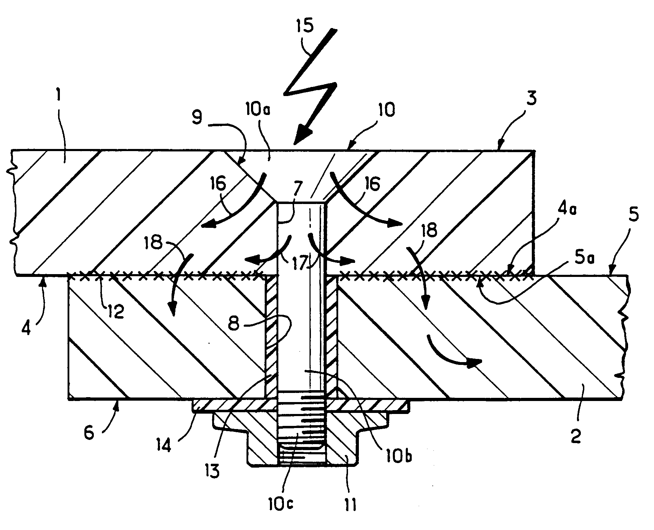

La figure unique du dessin annexé fera bien comprendre comment l'invention peut être réalisée.

La structure conforme à l'invention, montrée sur cette figure unique, comporte deux éléments 1 et 2 de matière composite, par exemple à base de fibres de carbone. L'élément 1 comporte une face extérieure 3 et une face intérieure 4, tandis que l'élément 2 comporte une face extérieure 5 et une face intérieure 6. Une partie 4a de la face intérieure 4 de l'élément 1 recouvre une partie 5a de la face extérieure 5 de l'élément 2. De plus, dans les parties chevauchantes desdits éléments 1 et 2 sont respectivement percées des trous 7 et 8, en regard l'un de l'autre, lorsque ladite partie 4a recouvre ladite partie 5a.

Par ailleurs, du côté de la face extérieure 3 de l'élément 1, le trou 7 comporte une fraisure 9.

Dans les trous 7 et 8 en regard est introduite une vis métallique 10 à tête fraisée 10a et à fût lisse 10b. Seule la partie de la vis 10 opposée à la tête fraisée 10a comporte un filetage 10c. La vis 10 est telle que sa tête fraisée 10a s'adapte exactement à la fraisure 9 et que le fût 10b s'applique contre la paroi du trou 7.

Avec la partie filetée 10c de la vis 10 coopère un écrou 11, par exemple en titane, susceptible de prendre appui sur la face intérieure 6 de l'élément 2 pour presser la tête fraisée 10a de la vis 10 dans la fraisure 9.

Conformément à la présente invention, entre les parties chevauchantes 4a et 5a des faces 4 et 5, est disposée une grille métallique 12, pourvue d'aspérités ou de picots susceptibles de pénétrer dans la matière des éléments 1 et 2, tandis qu'un canon isolant 13 entoure le fût 10b de la vis 10 dans son passage à travers le trou 8 de l'élément 2 et qu'une rondelle isolante 14 est disposée entre l'écrou 11 et la face intérieure 6 de l'élément 2. Pour éviter l'amorçage d'un arc entre la face intérieure 6 de l'élément 2 et l'écrou 11, le diamètre extérieur de la rondelle 14 est choisi de manière à dépasser de façon significative le diamètre extérieur de l'écrou 11.

Ainsi, lorsque la foudre, symbolisée par la flèche 15, atteint la tête 10a de la vis 10, le courant de foudre passe d'abord dans l'élément 1, d'une part, au niveau du contact entre la tête 10a et la fraisure 9 (flèches 16), et, d'autre part, au niveau du contact du fût 10b et du trou 7 (flèches 17). Puis, de l'élément 1, le courant de foudre passe dans l'élément 2, grâce à la grille 12 (flèches 18). L'énergie de foudroiement peut donc se dissiper à la fois dans l'élément 1 et dans l'élément 2. De plus, aucun arc n'apparaît entre l'écrou 11 et l'élément 2 grâce à l'action conjointe du canon isolant 13 et de la rondelle isolante 14.

On notera que :
- la grille 12 peut être remplacée par tout autre dispositif susceptible de donner une bonne continuité électrique à l'interface 4a-5a, comme par exemple un adhésif ou un matière d'étanchéité électriquement conducteur ;
- qu'au lieu d'être séparés, le canon 13 et la rondelle 14 peuvent être solidaires l'un de l'autre ;
- que le canon 13 et la rondelle 14 peuvent être remplacés par des couches isolantes disposées ou obtenues par traitement approprié, pratiquées sur la paroi du fût 10b de la vis 10, sur la paroi du trou 8 et/ou sur la face intérieure 6 de l'élément 2 ; et
- que le canon 13 peut ne s'étendre que sur une partie seulement de l'épaisseur de l'élément 2 (celle qui se trouve au voisinage de l'écrou 11 ) au lieu de recouvrir la totalité de la hauteur du trou 8, comme cela est représenté.

On comprendra que, grâce à la présente invention, l'écrou 11 peut être standard et on constatera, de la description ci-dessus, que la structure conforme à l'invention est particulièrement simple.

## Revendications

1. Structure anti-étincelage, notamment pour aéronef, comportant :
- deux éléments (1,2) de matière composite ayant chacun une face extérieure (3,5) et une face intérieure (4,6) et disposés de façon que la face intérieure (4) du premier desdits éléments (1) soit au moins partiellement superposée à la face extérieure (5) du second desdits éléments (2), les parties superposées (4a,5a) desdits éléments comportant des trous (7,8) en regard ;
- une vis (10) à tête fraisée (10a) traversant lesdits trous (7,8) en regard de façon que sa tête (10a) vienne se loger dans une fraisure (9) prévue dans la face extérieure (3) dudit premier élément (1) ;
- un écrou (11) susceptible de coopérer avec ladite vis (10) et de prendre appui sur la face intérieure (6) dudit second élément (2) pour presser ladite tête fraisée (10a) dans ladite fraisure (9) ; et
- des premiers moyens (14) pour isoler électriquement ledit écrou (11) de ladite face intérieure (6) dudit second élément (2),
caractérisée en ce qu'elle comporte :
- des moyens (12) pour améliorer la conduction électrique entre les parties superposées de la face intérieure dudit premier élément et de la face extérieure dudit second élément ; et
- des seconds moyens (13) pour isoler électriquement dudit second élément (2) au moins la partie de la vis (10) proche dudit écrou (11).

2. Structure selon la revendication 1,
caractérisé en ce que lesdits moyens (12) d'amélioration de la conduction électrique sont formés par une couche électriquement conductrice d'un adhésif ou d'une matière d'étanchéité.

3. Structure selon la revendication 1,
caractérisée en ce que lesdits moyens (12) d'amélioration de la conduction électrique sont formés par une grille électriquement conductrice.

4. Structure selon la revendication 3,
caractérisée en ce que ladite grille comporte des aspérités.

5. Structure selon l'une quelconque des revendications 1 à 4,
caractérisée en ce que lesdits seconds moyens (13) d'isolation électrique sont formés par une couche isolante pratiquée sur ladite vis et/ou ledit trou dans ledit second élément.

6. Structure selon l'une quelconque des revendications 1 à 4,
caractérisée en ce que lesdits seconds moyens (13) d'isolation électrique sont formés par un canon isolant entourant ladite vis.

7. Structure selon l'une quelconque des revendications 1 à 6,
caractérisée en ce que lesdits seconds moyens (13) d'isolation électrique s'étendent sur toute l'épaisseur dudit second élément.

8. Structure selon l'une quelconque des revendications 1 à 7,
caractérisée en ce que lesdits premiers et seconds moyens (14, 13) d'isolation électrique sont solidaires les uns des autres sans discontinuité.

9. Structure selon l'une quelconque des revendications 1 à 8, dans laquelle ladite vis (10) est du type à fût (10b) lisse dont seule l'extrémité (10c) opposée à la tête est filetée,
caractérisée en ce que la partie dudit fût (10b) traversant le trou (7) dudit premier élément (1) est en contact avec la paroi dudit trou.

## Patentansprüche

1. Funkenschutzanlage, insbesondere für Luftfahrzeuge, mit:
- zwei Elementen (1,2) aus Verbundstoff mit jeweils einer Außenfläche (3,5) und einer Innenfläche (4,6), die so angeordnet sind, daß die Innenfläche (4) des ersten Elements (1) mindestens teilweise auf der Außenfläche (5) des zweiten Elements (2) liegt, wobei die übereinanderliegenden Teile (4a,5a) der Elemente einander gegenüberliegende Bohrungen (7,8) haben;
- einer Schraube (10) mit Senkkopf (10a), die so in den einander gegenüberliegenden Bohrungen (7,8) angeordnet ist, daß ihr Kopf (10a) in einer Senkung (9) in der Außenfläche (3) des ersten Elements (1) gelagert ist;
- einer Mutter (11), die mit der Schraube (10) zusammenwirken kann und auf der Innenfläche (6) des zweiten Elements (2) aufliegt und den Senkkopf (10a) in die Senkung (9) preßt; und
- ersten Mitteln (14), um die Mutter (11) gegenüber der Innenfläche (6) des zweiten Elements (2) elektrisch zu isolieren,
dadurch gekennzeichnet, daß sie umfaßt:
- Mittel (12) zur Verbesserung der elektrischen Leitung zwischen den übereinanderliegenden Teilen der Innenfläche des ersten Elements und der Außenfläche des zweiten Elements; und
- zweite Mittel (13), um zumindest den an der Mutter (11) liegenden Teil der Schraube (10) gegenüber dem zweiten Element (2) elektrisch zu isolieren.

2. Anlage nach Anspruch 1,
dadurch gekennzeichnet, daß die Mittel (12) zur Verbesserung der elektrischen Leitung aus einer elektrisch leitenden Schicht eines Klebers oder eines Dichtungsmittels bestehen.

3. Anlage nach Anspruch 1,
dadurch gekennzeichnet, daß die Mittel (12) zur Verbesserung der elektrischen Leitung aus einem elektrisch leitenden Gitter bestehen.

4. Anlage nach Anspruch 3,
dadurch gekennzeichnet, daß das Gitter Unebenheiten hat.

5. Anlage nach einem der Ansprüche 1 bis 4,
dadurch gekennzeichnet, daß die zweiten Mittel (13) zur elektrischen Isolierung aus einer Isolierschicht auf der Schraube und/oder der Bohrung im zweiten Element bestehen.

6. Anlage nach einem der Ansprüche 1 bis 4,
dadurch gekennzeichnet, daß die zweiten Mittel (13) zur elektrischen Isolierung aus einem Isolierrohr um die Schraube bestehen.

7. Anlage nach einem der Ansprüche 1 bis 6,
dadurch gekennzeichnet, daß sich die zweiten Mittel (13) zur elektrischen Isolierung über die gesamte Dicke des zweiten Elements erstrecken.

8. Anlage nach einem der Ansprüche 1 bis 7,
dadurch gekennzeichnet, daß die ersten und zweiten Mittel (14,13) zur elektrischen Isolierung miteinander unterbrechungslos fest verbunden sind.

9. Anlage nach einem der Ansprüche 1 bis 8, bei der die Schraube (10) einen glatten Schaft (10b) hat, von dem nur das dem Kopf entgegengesetzte Ende (10c) ein Gewinde hat, dadurch gekennzeichnet, daß der in Bohrung (7) des ersten Elements (1) befindliche Teil des Schafts (10b) mit der Wand der Bohrung in Kontakt kommt.

## Claims

1. Anti-spark structure, in particular for aircraft, including:
- two elements (1, 2) of composite material each one having an outer face (3, 5) and an inner face (4, 6) and which two elements are located such that the inner face (4) of the first of the said elements (1) is at least partially superimposed on the outer face (5) of the second of the said elements (2), the superimposed parts (4a, 5a) of the said elements including opposing holes (7, 8);
- a screw (10) with countersunk head (10a) passing through the said opposing holes (7, 8) such that its head (10a) becomes housed in a countersink (9) provided in the outer face (3) of the said first element (1);
- a nut (11) capable of interacting with the said screw (10) and of bearing on the inner face (6) of the said second element (2) in order to press the said countersunk head (10a) into the said countersink (9); and
- first means (14) for electrically insulating the said nut (11) from the said inner face (6) of the said second element (2),
characterized in that it includes:
- means (12) for improving the electrical conduction between the superimposed parts of the inner face of the said first element and of the outer face of the said second element; and
- second means (13) for electrically insulating at least that part of the screw (10) close to the said nut (11) from the said second element (2).

2. Structure according to Claim 1,
characterized in that the said means (12) for improving the electrical conduction are formed by an electrically conductive layer of an adhesive or of a sealing material.

3. Structure according to Claim 1,
characterized in that the said means (12) for improving the electrical conduction are formed by an electrically conductive grid.

4. Structure according to Claim 3,
characterized in that the said grid includes roughnesses.

5. Structure according to any one of Claims 1 to 4,
characterized in that the said second electrical insulation means (13) are formed by an insulating layer made on the said screw and/or the said hole in the said second element.

6. Structure according to any one of Claims 1 to 4,
characterized in that the said second electrical insulation means (13) are formed by an insulating barrel surrounding the said screw.

7. Structure according to any one of Claims 1 to 6,
characterized in that the said second electrical insulation means (13) extend over the entire thickness of the said second element.

8. Structure according to any one of Claims 1 to 7,
characterized in that the said first and second electrical insulation means (14, 13) are secured to one another without discontinuity.

9. Structure according to any one of Claims 1 to 8,
in which the said screw (10) is of the type having a smooth shank (10b) of which only the opposite end (10c) from the head is threaded,
characterized in that the part of the said shank (10b) passing through the hole (7) in the said first element (1) is in contact with the wall of the said hole.
